# EUROPEAN PATENT APPLICATION

(11) **EP 3 789 355 A1**
(43) Date of publication of application: **10.03.2021**
(21) Application number: 19020502.1
(22) Date of filing: 04.09.2019
(51) Int. Cl.: C03B 5/12, C03B 5/235, C21B 5/00, C21B 11/02, C21B 13/00, C21B 13/02, F27B 1/08, F27D 3/16

(54) **A METHOD OF OPERATING A SHAFT FURNACE**

(71) Applicant: Linde GmbH, 82049 Pullach (DE)
(72) Inventor: Niehoff, Thomas, 81735 München (DE); Adendorff, Martin, 80687 München (DE)
(74) Representative: Gellner, Bernd

(57) **Abstract**

The present invention relates to a method of operating a shaft furnace (100) and to such a shaft furnace (100), in particular a cupola furnace, wherein hydrogen and an oxidant are injected into the shaft furnace (100) such that the shaft furnace (100) is heated by combustion of the hydrogen and the oxidant. Metallic material like iron or mineral material like mineral wool may be processed.

## Description

The present invention relates to a method of operating a shaft furnace and to such a shaft furnace, in particular a cupola furnace.

### Prior art

Shaft furnaces or blast furnaces are used for the processing of material, particularly metallic or mineral material, e.g. for the melting of metals and the production of iron or mineral wool. In a shaft furnace, fuel such as coke is continuously supplied together with the material to be processed from a top of the furnace, while a hot blast of an oxidant, usually air and/or oxygen, is blown into a lower section of the furnace through a series of pipes (so called tuyeres), such that a chemical reactions can take place throughout the furnace as the material moves downward. The downward flow of the corresponding material in contact with an upward flow of hot combustion gases is a countercurrent exchange and chemical reaction process. End products like molten metallic material, molten lava or slag can be extracted from a bottom of the furnace.

Shaft furnaces of that kind can e.g. be so called cupola furnaces, which can for example be used for the production of iron or mineral wool. Cupola furnaces can be coke-fired or coke-less furnaces. In coke-fired cupola furnaces, foundry coke is used as a fuel and combusted with an oxidant, thereby producing the amount of energy required for melting of the material. A cupola furnace of that kind can e.g. be charged from above with the coke, the material to be melted and if necessary additive substances. The oxidant can be injected into a lower part of the furnace. The resulting melt accumulates on the floor of the cupola furnace and can be siphoned off. In coke-less cupola furnaces liquid or gaseous fuel sources are used, such as natural gas, and are combusted with an oxidant.

However, shaft furnaces of that kind, particularly cupola furnaces, both coke-fired and coke-less ones, produce high CO₂ emissions per tonne of produced metal or mineral wool. It is therefore desirable to reduce CO₂ emissions of shaft furnaces.

### Disclosure of the invention

The present invention relates to a method of operating a shaft furnace and to a shaft furnace with the features of the independent claims. Further advantages and embodiments of the invention will become apparent from the description and the appended figures.

According to the present invention, hydrogen and an oxidant are injected into the shaft furnace such that the shaft furnace is heated by combustion of the hydrogen and the oxidant.

The term shaft furnace or blast furnace is particularly to be understood as a furnace for the processing of a material, particularly a metallic or mineral material, wherein material to be processed is continuously or discontinuously supplied from a top section of the furnace and wherein the furnace is heated in a lower section of the furnace particularly by a combustion such that a chemical reaction of the material can take place throughout the furnace, since a downward flow of the corresponding material is in contact with an upward flow of hot combustion gases. In particular, the shaft furnace is a cupola furnace. However, other types of shaft furnace can also be operated according to the invention.

Common shaft furnaces are usually heated either by combustion of coke, as e.g. in common coke-fired cupola furnaces, or of a gaseous fuel like natural gas, for example in coke-less cupola furnaces. However, combustion of these materials produces high CO₂ emissions. In contrast to that, the shaft furnace is heated according to the present invention by combustion of hydrogen. Therefore, combustion of hydrogen can particularly be used instead of or at least additionally to combustion of coke and/or gaseous fuels like natural gas for the heating of the shaft furnace. At least some amount or even the entire amount of coke and/or gaseous fuels, particularly natural gas, is therefore replaced by hydrogen. Therefore, CO₂ emissions in shaft furnaces can be significantly reduced or even eliminated and replaced by the emissions of gaseous H₂O. Thus, a significant reduction or even a complete elimination of CO₂ emissions and/or greenhouse gases in a shaft furnace can be achieved by the present invention.

In the course of the present invention it has been found out that the combustion efficiency of hydrogen is similar to the combustion effectiveness of carbon and that hydrogen is therefore particularly suitable for efficiently processing metallic or mineral material in the shaft furnace and simultaneously for effectively reducing CO₂ emissions. Further, the present invention particularly provides the possibility of coke replacement, productivity increase in material processing, e.g. in the production of iron or mineral wool, as well as temperature increase in the centre of the shaft furnace.

The use of hydrogen may especially reduce the specific fuel consumption of the shaft furnace. In particular, green hydrogen can be used for the shaft furnace, i.e. hydrogen produced by means of renewable energy sources. Thus, green fuel from low cost and environment friendly hydrogen production can be used for operating the shaft furnace.

Advantageously, hydrogen is injected through at least one hydrogen injection element and the oxidant is injected through at least one oxidant injection element. Hydrogen and the oxidant are therefore particularly not premixed and are expediently injected using different lances. The hydrogen and oxidant injection elements are particularly provided in a lower section of the shaft furnace, expediently in a combustion zone or reactive combustion zone. Particularly, solely hydrogen is injected through the hydrogen injection element. However, it is also possible to inject the hydrogen through the hydrogen injection element expediently together with other gases, liquids and/or solids.

Preferably, hydrogen and/or the oxidant are each injected through at least one tuyere or through at least one lance placed within a tuyere. The hydrogen injection element and/or the oxidant injection element are each preferably provided as a tuyere or as part of a tuyere. A tuyere is a specific kind of injection element for furnaces, e.g. specific tubes, nozzles or pipes, through which a fluid is injected into the furnace under pressure. Tuyeres can particularly be cooled, e.g. water cooled.

According to a preferred embodiment, air and/or oxygen are injected as the oxidant. Hydrogen in combination with oxygen can particularly help to brighten tuyeres and to increase the temperature in a melting area of the shaft furnace.

In a particularly preferred embodiment, a mixture of air and oxygen is injected as the oxidant. For this purpose, a so called "HIGHJET" or "HIGHJET TDI" injection element developed and distributed by the applicant can be used. These kinds of injection elements are used to enrich air with oxygen and to inject the corresponding gas mixture far into the interior of the shaft furnace at high velocities, e.g. of up 250m/s. In particular, in these kinds of injection elements oxygen is injected though a nozzle, e.g. a laval nozzle, escaping from the nozzle at a high speed and thereby generating a low pressure, which is used to suck in air, the so called injector wind or injector blast. The amount of this sucked-in air can particularly be measured and controlled and mixed with the oxygen. This mixture of accelerated oxygen and sucked-in injector blast forms a driving nozzle flow, which provides the oxidant for the combustion process in the shaft furnace in a defined manner. It is particularly also possible to inject hydrogen through a "HIGHJET" or "HIGHJET TDI" injection element of that kind, i.e. a "HIGHJET" or "HIGHJET TDI" injection element can particularly be provided as the at least one hydrogen injection element.

Advantageously, the shaft furnace is solely heated by the combustion of hydrogen and the oxidant. In this case, particularly no coke or natural gas is used for operating the shaft furnace and CO₂ emissions can expediently be eliminated and replaced by gaseous H₂O.

Alternatively, an additional combustion of an additional fuel is advantageously performed for heating the shaft furnace. Hydrogen combustion is used to support the additional combustion, therefore reducing CO₂ emissions.

Preferably, coke or foundry coke is supplied as the additional fuel. In this case, at least some amount of coke or foundry coke of a coke-fired shaft furnace can be replaced by injecting hydrogen.

Alternatively or additionally, natural gas is preferably supplied as the additional fuel. Thus, in a coke-less shaft furnace at least some amount of natural gas can be replaced by hydrogen.

Advantageously, the shaft furnace is used for processing of a metallic or mineral material, in particular for production of iron or mineral wool. Thus, a reduction or elimination of CO₂ emissions in iron making and mineral wool production particularly using cupola furnaces can be achieved by replacing some of the coke or all of the fuel gas with hydrogen. Productivity of iron or mineral wool production can particularly be increased.

The present invention further relates to shaft furnace, in particular to a cupola furnace. Advantages and embodiments of the shaft furnace according to the invention shall arise from the above description of the method according to the invention in analogous manner. Particularly, the shaft furnace according to the invention is adapted to perform a method according to the invention.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- Figure 1: schematically shows a first embodiment of a shaft furnace according to the invention in a sectional side view and in a sectional top view designed to perform a method according to the present invention, and
- Figure 2: schematically shows a second embodiment of a shaft furnace according to the invention in a sectional side view and in a sectional top view designed to perform a method according to the present invention.

### Detailed description

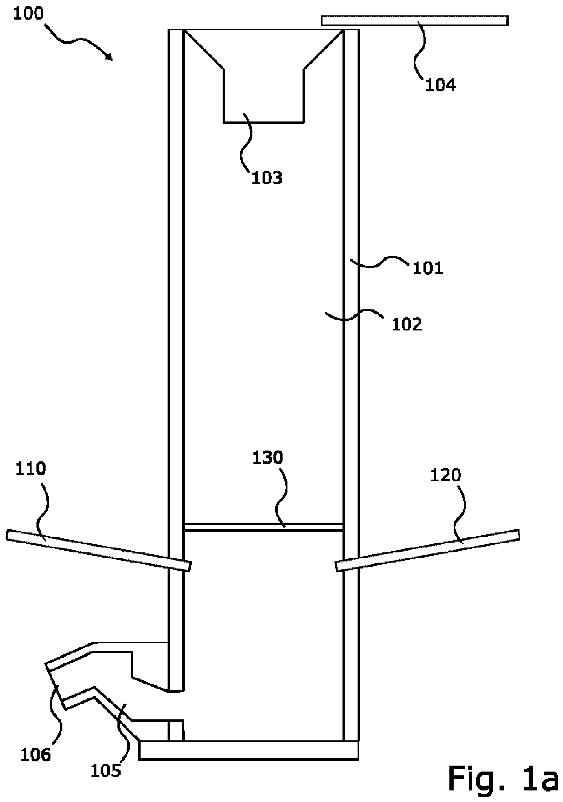

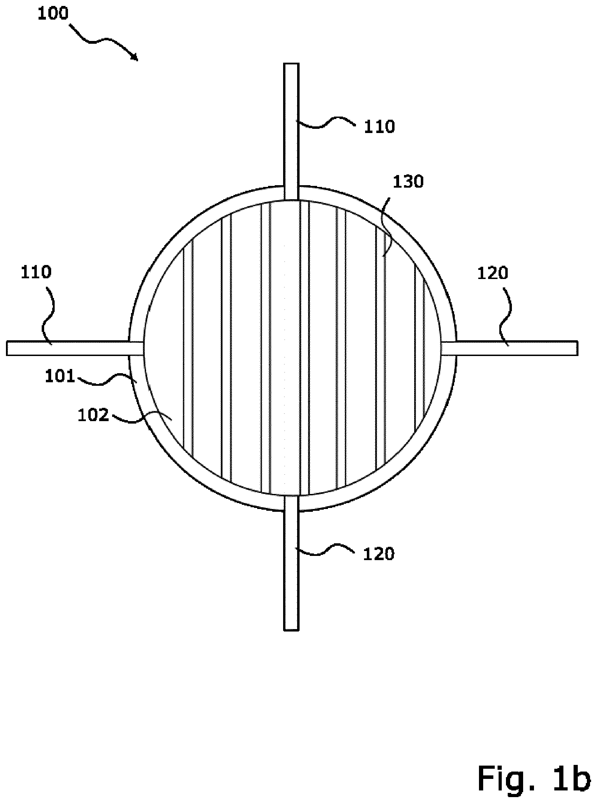

Fig. 1a schematically shows a shaft furnace 100 according to the present invention in a sectional side view and Fig. 1b schematically shows the shaft furnace 100 in a sectional top view. The shaft furnace is designed as a cupola furnace 100, particularly for melting of a metallic or mineral material, e.g. for the production of iron or mineral wool.

The cupola furnace 100 has a cylindrical jacket 101, which encloses a shaft 102. A filler opening 103 is provided in a top section of the cupola furnace 100 through which the material to be processed as well as additive substances, if necessary, can be supplied. A conveyor unit 104 may also be provided in the top section, such that the material to be processed can continuously be fed into the furnace 100.

In a lower section of the furnace, a water cooled grid or grate 130 is provided in order to support the material to be processed. Beneath the water cooled grid 130, expediently in a combustion zone or reactive combustion zone, hydrogen and an oxidant are injected into the shaft furnace such that the shaft furnace is heated by combustion of the hydrogen and the oxidant.

For this purpose, at least one hydrogen injection element 110 is provided for injecting hydrogen into the shaft furnace 100 and at least one oxidant injection element 120 is provided for injecting the oxidant into the shaft furnace 100.

By means of this combustion, a chemical reaction of the material can take place throughout the furnace 100, since a downward flow of the corresponding material is in contact with an upward flow of hot combustion gases. A siphon 105 with a removal opening 106 is provided at a bottom of the furnace 100 through which the processed material can be extracted, e.g. by tilting a hinged furnace floor (not shown).

It is to be understood that the cupola furnace can comprise further elements which are not explicitly shown in Fig. 1 a and Fig. 1b for reasons of clarity.

In particular, air or oxygen is provided through the oxidant injection element 120. According to a particularly preferred embodiment, a mixture of air and oxygen is provided as the oxidant. For this purpose, a so called "HIGHJET" or "HIGHJET TDI" injection element distributed by the applicant can be provided as the oxidant injection element 120. It is particularly also possible to provide a "HIGHJET" or "HIGHJET TDI" injection element as the hydrogen injection element 110 for injecting hydrogen.

It is, however, also possible that the hydrogen and oxidant injection elements 110, 120 can be provided as hydrogen, air and oxygen burners, i.e. as burners to inject and burn hydrogen, air and oxygen.

According to a particularly advantageous embodiment, the cupola furnace 100 is solely heated by the combustion of hydrogen and the oxidant. Therefore, the cupola furnace 100 particularly produces no or at least no CO₂ and greenhouse gas emissions. The shaft furnace 100 shown in Figs. 1a and 1b is therefore provided as a gas fired cupola furnace, which is coke-less and therefore advantageously has a water cooled grid 130.

It is, however, also possible that an additional combustion of an additional fuel is performed for heating the shaft furnace and that hydrogen combustion is used to support this additional combustion.

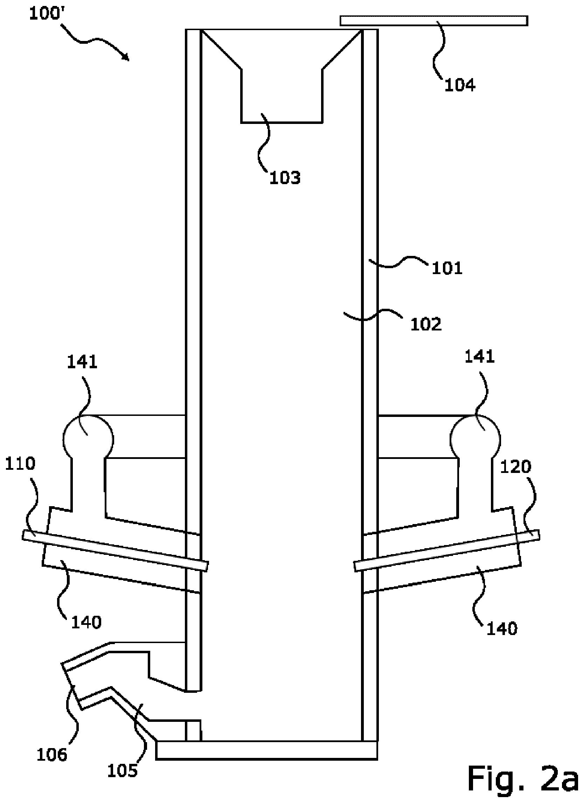

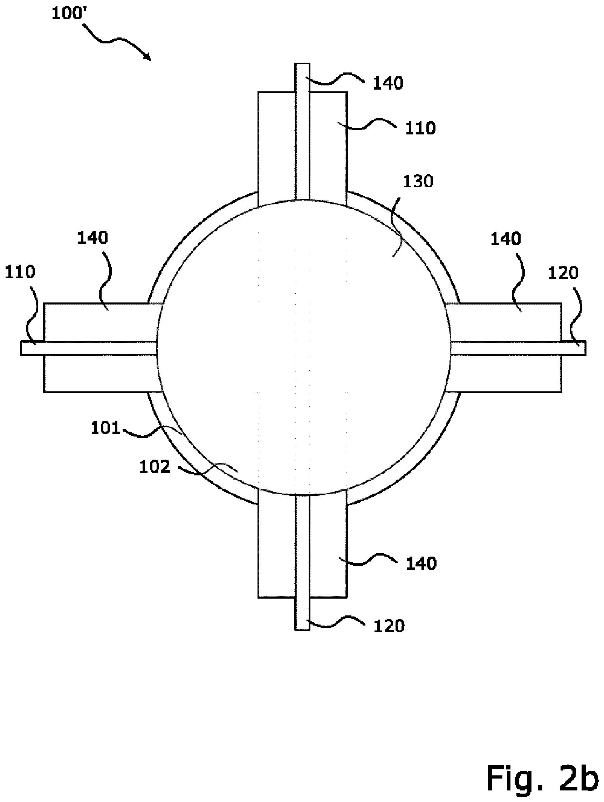

A corresponding shaft furnace 100' of that kind according to another preferred embodiment of the present invention is schematically shown in Fig. 2a in a sectional side view and in Fig. 2b in a sectional top view.

Correspondingly to the furnace 100 shown in Fig. 1a and Fig. 1b, furnace 100' is also designed as a cupola furnace, particularly for melting of a metallic or mineral material. Identical reference signs in the figures refer to identical or equivalent elements.

The furnace 100' is particularly provided as a coke-fired cupola furnace. For example, coke or foundry coke can be supplied as additional fuel, particularly from above through the filler opening 103 together with the material to be processed.

In this coke-fired cupola furnace 100', hydrogen and oxidant injection elements 110, 120 are particularly provided as corresponding lances installed in a tuyere 140 of the furnace 100'. Further, blast air supply ducts or nozzles 141 are provided for blowing air into the furnace 100', such that chemical reactions can take place throughout the furnace 100' as the material to be melted and the coke fall downward.

In this case, the cupola furnace 100' is still operated with coke. However, the coke requirement is particularly reduced to a minimum to mainly carburise iron. The heat for melting and superheating is particularly provided by the combustion of hydrogen and oxygen with the substantial reduction of CO₂ emissions.

Alternatively of additionally, natural gas can be supplied as additional fuel. For this purpose, a corresponding natural gas injection element and/or a natural gas burner can be provided analogously to the hydrogen injection element 110 and the oxidant injection element 120 in the lower section of the furnace. In these cases, CO₂ and greenhouse gas emission can significantly be reduced to a common cupola furnace without hydrogen combustion.

Therefore, a significant reduction or even a complete elimination of CO₂ emissions and/or greenhouse gases in a shaft furnace, particularly in a cupola furnace can be achieved by the present invention.

### Reference List

- 100: shaft furnace, gas fired cupola furnace
- 100': shaft furnace, coke fired cupola furnace
- 101: cylindrical jacket
- 102: shaft
- 103: charge opening
- 104: conveyor unit
- 105: siphon
- 106: removal opening
- 110: hydrogen injection element or hydrogen, air and oxygen burner
- 120: oxidant injection element or hydrogen, air and oxygen burner
- 130: water cooled grid
- 140: tuyere
- 141: blast air supply duct

## Claims

1. A method of operating a shaft furnace (100, 100'), in particular a cupola furnace, **characterised in that** hydrogen and an oxidant are injected into the shaft furnace (100, 100') such that the shaft furnace (100, 100') is heated by combustion of the hydrogen and the oxidant.

2. The method according to claim 1, wherein hydrogen is injected through at least one hydrogen injection element (110) and wherein the oxidant is injected through at least one oxidant injection element (120).

3. The method according to claim 1 or 2, wherein hydrogen and/or the oxidant are each injected through at least one tuyere (140) or through at least one lance (110, 120) placed within a tuyere (140).

4. The method according to any one of the preceding claims, wherein air and/or oxygen are injected as the oxidant.

5. The method according to any one of the preceding claims, wherein the shaft furnace (100) is solely heated by the combustion of hydrogen and the oxidant or wherein an additional combustion of an additional fuel is performed for heating the shaft furnace (100').

6. The method of claim 5, wherein coke is supplied as the additional fuel.

7. The method of claim 5 or 6, wherein a gaseous fuel is supplied as the additional fuel, particularly natural gas.

8. The method according to any one of the preceding claims, wherein the shaft furnace (100, 100') is used for processing of a metallic or mineral material, in particular for production of iron or mineral wool.

9. A shaft furnace (100, 100'), in particular a cupola furnace, **characterised by** at least one hydrogen injection element (110) for injecting hydrogen into the shaft furnace (100) and at least one oxidant injection element (120) for injecting an oxidant into the shaft furnace (100, 100') such that the shaft furnace (100, 100') is heated by a combustion of the hydrogen and the oxidant.

10. The shaft furnace (100') according to claim 9, wherein the hydrogen injection element (110) and/or the oxidant injection element (120) are each preferably provided as a tuyere (140) or as part of a tuyere (140).

11. The shaft furnace (100') according to claim 9 or 10, wherein the shaft furnace (100') comprises a fuel inlet for the introduction of an additional fuel, wherein the additional fuel is particularly coke and/or natural gas.
